# FASCICULE DE BREVET EUROPEEN

(11) **EP 2 730 324 B1**
(45) Date de publication et mention de la délivrance du brevet: **30.05.2018**
(21) Numéro de dépôt: 13191609.0
(22) Date de dépôt: 05.11.2013
(51) Int. Cl.: B01D 17/02, B01D 17/04, B04B 1/04, B04B 15/06

(54) **Séparateur de liquides non-miscibles par coalescence**
Trennvorrichtung für unmischbare Flüssigkeiten durch Koaleszenz
Separator of immiscible liquids using coalescence

(30) Priorité: 07.11.2012 FR 1260562
(43) Date de publication de la demande: 14.05.2014
(73) Titulaire: KWI International Environmental Treatment GmbH, 9170 Ferlach (AT)
(72) Inventeur: KALTCHEV, Roumen, 73000 MONTAGNOLE (FR)
(74) Mandataire: Cabinet Laurent & Charras

(56) Documents cités:
- GB-A- 1 557 965
- US-A1- 2003 136 729
- US-A1- 2008 011 693
- US-A1- 2011 000 372

## Description

### DOMAINE TECHNIQUE

L'invention concerne un dispositif de séparation des huiles ou des hydrocarbures présents dans des eaux usées ou des eaux de process. Son fonctionnement est basé sur la coalescence des gouttelettes d'huile sur des plaques ondulées.

Ce type de dispositifs est couramment appelé séparateur d'huile ou filtre à coalescence. Il peut être utilisé dans l'industrie du pétrole, mais également pour épurer toutes sortes d'eaux résiduaires ou pluviales contenant des huiles ou des hydrocarbures.

### ART ANTERIEUR

La séparation de deux phases liquides de densité différente (par exemple de l'eau polluée par des huiles ou par des hydrocarbures dans la grande majorité des cas) par coalescence des gouttelettes sur plaques oleophiles ondulées est un procédé connu et exploité depuis longtemps. Il consiste à faire passer l'eau contenant des huiles à travers un paquet de plaques ondulées dans le sens vertical et posées à l'horizontal, lesdites plaques étant disposées à une certaine distance les unes des autres. Lors de ce passage, les gouttelettes d'huile, ayant tendance à flotter, s'accumulent en partie supérieure des ondes, forment des gouttes de plus en plus grandes et finissent par s'évacuer vers le haut par des trous percés dans la partie supérieure de chaque onde. Ainsi, l'eau se débarrasse des gouttelettes d'huile au fur et à mesure de son passage à travers le paquet de plaques ondulées. En même temps, les huiles sont collectées dans l'espace situé au-dessus du paquet de plaques ondulées où elles forment une couche d'huile flottant au-dessus de la couche d'eau. Il est ensuite facile d'éliminer cette couche d'huile par des purges périodiques ou par simple débordement.

Il existe de nombreux dispositifs utilisant cette technologie de séparation. Leur fonctionnement est fiable et satisfaisant tant que l'eau ne contient que des matières liquides (huiles et autres) flottantes. Ces liquides sont faciles à concentrer en partie supérieure des ondes et à évacuer vers le haut à travers les trous situés en partie supérieure des plaques ondulées.

Le document US 2003/136729 décrit ce type de dispositif, mettant en oeuvre la technologie de séparation lamellaire.

Néanmoins, la présence de matières en suspension (MES) décantables peut parfois poser problème car celles-ci ont tendance à se déposer au fond des ondes et à colmater progressivement le passage jusqu'à obstruction complète du paquet. Comme les ondes sont horizontales, les MES déposées au fond des ondes sont difficiles à éliminer, même en vidangeant le dispositif.

La grande majorité des dispositifs existants utilisent des paquets de plaques fixés dans des cuves stationnaires. Ainsi, le seul moyen de nettoyer les dépôts accumulés entre les plaques est de sortir le paquet de plaques de la cuve et de le nettoyer en démontant les plaques ou en le pivotant à 90° de façon à ce que le fond des ondes s'incline et permette ainsi l'écoulement des dépôts vers le bas. Alternativement, le document US 2008/011693 propose le nettoyage des plaques au moyen de générateurs à ultrasons et dans le document EP 0371655 le nettoyage s'effectue en faisant passer un tube comprenant de buses à travers l'un des trous de purge des plaques.

### EXPOSE DE L'INVENTION

Le dispositif selon l'invention est un dispositif avec cuve stationnaire, la structure du dispositif visé permettant la mise en oeuvre d'un paquet de plaques ondulées tournant à l'intérieur de la cuve qui demeure fixe. Ce concept permet, lors du lavage du paquet de plaques, de faire pivoter seulement ledit paquet et non pas la cuve entière.

A cet effet, le dispositif de séparation de deux phases liquides de densité différente ou de poids spécifique différent par coalescence selon l'invention, comprend :
- une cuve fixe équipée :
   ▪ de moyens d'introduction de l'une des deux phases liquides contenant des microgouttelettes de la seconde phase liquide de densité inférieure à celle de la première phase liquide (ci-après dénommée la fraction liquide légère),
   ▪ de moyens d'évacuation de la première phase liquide épurée,
   ▪ de moyens d'évacuation de la fraction liquide légère séparée en partie supérieure de la cuve et
   ▪ éventuellement de moyens d'évacuation de l'eau de lavage ;
- au moins une structure tournante ménagée à l'intérieur de ladite cuve et équipée de moyens permettant la mise en place d'un paquet de plaques ondulées, séparées les unes des autres d'une distance sensiblement constante et parallèles les unes aux autres, lesdites plaques étant ondulées dans le sens vertical et posées à plat à l'horizontale lors de la phase de séparation, et permettant la fixation dudit paquet sur ladite structure ;
- des moyens de confinement de l'espace entre les parois internes de la cuve et le paquet de plaques ondulées, apte à faire passer la première phase liquide contenant des microgouttelettes de la seconde phase liquide préférentiellement entre les plaques ondulées et évitant le passage de ladite première phase liquide contenant des microgouttelettes de la seconde phase liquide autour dudit paquet ;
- des moyens permettant la rotation de ladite structure à l'intérieur de ladite cuve ;
- des moyens d'entraînement mécanique permettant de faire tourner ladite structure tournante.

Selon un mode de réalisation avantageux de l'invention, ce dispositif comprend en outre des moyens de lavage permettant de laver le paquet de plaques ondulées, lesdits moyens de lavage étant fixés sur la cuve ou encore, étant susceptibles de tourner avec la structure tournante.

Selon l'invention, la structure tournante peut tourner à l'intérieur de la cuve autour d'un axe faisant partie de ladite structure tournante ou faisant partie de la cuve.

L'ensemble peut également être dépourvu d'axe mécanique. Ainsi, la structure tournante peut tourner à l'intérieur de la cuve sur des guides, des roues ou d'autres moyens fixés sur la structure tournante ou sur la cuve.

### BREVE DESCRIPTION DES FIGURES

La manière dont l'invention peut être réalisée et les avantages qui en découlent ressortiront mieux des exemples de réalisation qui suivent, donnés à titre indicatif et non limitatif, à l'appui des figures annexées.
La figure 1 est une représentation schématique en deux sections verticales, d'une construction possible du dispositif conforme à l'invention. Dans cette version du dispositif selon l'invention, en fonctionnement normal, il n'y a pas de surface liquide libre dans la cuve. Le dispositif est donc entièrement plein.
La figure 2 est une représentation schématique en section verticale du dispositif de la figure 1, illustrant la structure tournante respectivement en position de fonctionnement normal (en haut de la planche 2), et en position de lavage (en bas de la planche 2).
La figure 3 est une représentation schématique en sections verticales d'une autre forme de réalisation du dispositif conforme à l'invention de la figure 1 avec une surface liquide libre à l'intérieure de la cuve.

### DESCRIPTION DETAILLEE DE L'INVENTION

Le dispositif selon l'invention permet de séparer deux phases liquides de densité différente par coalescence sur plaques ondulées. La description ci-après se réfère à l'huile et à l'eau pour des raisons de simplicité et afin de ne pas alourdir le texte, mais le dispositif pourrait séparer tout autre liquide de densité différente.

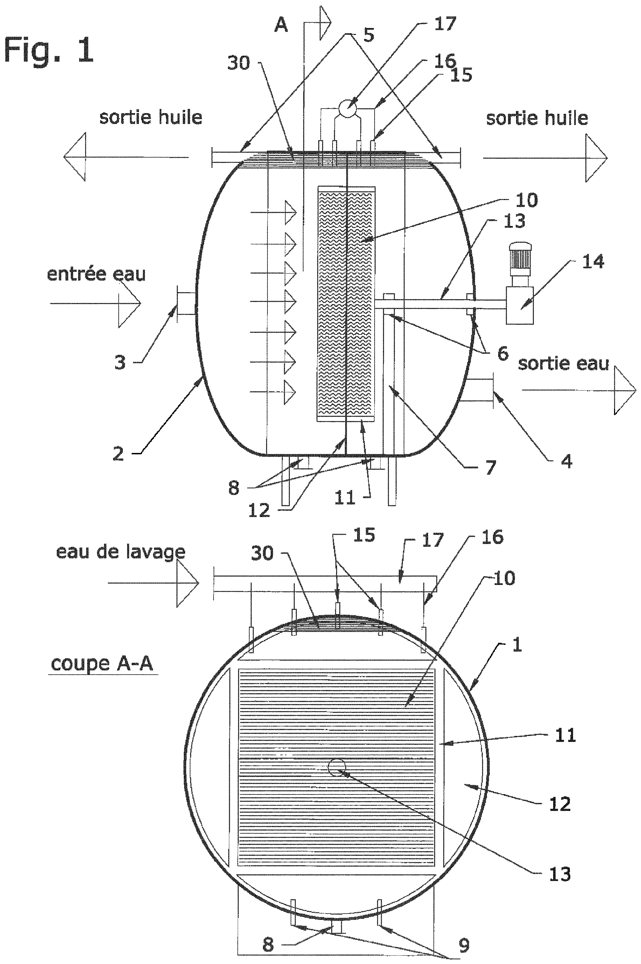

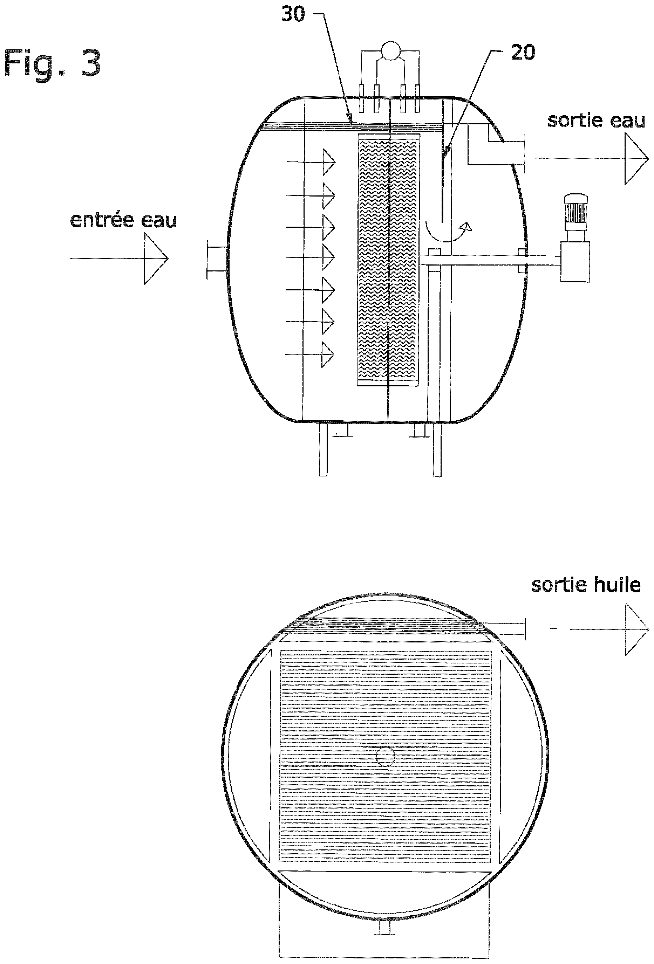

Selon une première forme de réalisation de l'invention plus particulièrement décrite en relation avec les figures 1 et 3, le dispositif selon l'invention comprend une cuve en forme de réservoir cylindrique **1** fermé avec des parois latérales **2** et équipé :
- d'une tuyauterie d'entrée de l'eau à traiter **3** située en amont du paquet de plaques ondulées **10** ;
- d'une tuyauterie de sortie de l'eau traitée **4** en aval du paquet de plaques ondulées ;
- de deux sorties de l'huile **5** situés de chaque côté d'une cloison **12.**

Le paquet de plaques **10** est constitué d'une pluralité de plaques ondulées parallèles entre elles, et typiquement séparées l'une de l'autre d'une distance sensiblement constante comprise le plus souvent entre 6 et 12 millimètres (valeurs données à titre exemplatif).

La cuve est également équipée d'un dispositif de lavage composé de plusieurs buses **15** fixées sur ladite cuve de façon à assurer un lavage sous pression de la totalité du paquet de plaques ondulées **10.** Ces buses sont raccordées par des tuyauteries **16** à une nourrice en eau de lavage **17.**

Le dispositif comporte également une structure tournante **11** contenant le paquet de plaques ondulées **10,** et est équipée de cloisons **12** aptes à obliger le passage de l'eau à traiter à travers ledit paquet de plaques ondulées. Elle est équipée d'un axe **13** supporté d'un côté par un support **7** et des roulements **6.** Un motoréducteur **14** permet de faire tourner l'axe **13** et, avec lui, toute la structure tournante.

Le dispositif selon l'invention fonctionne de la manière suivante.

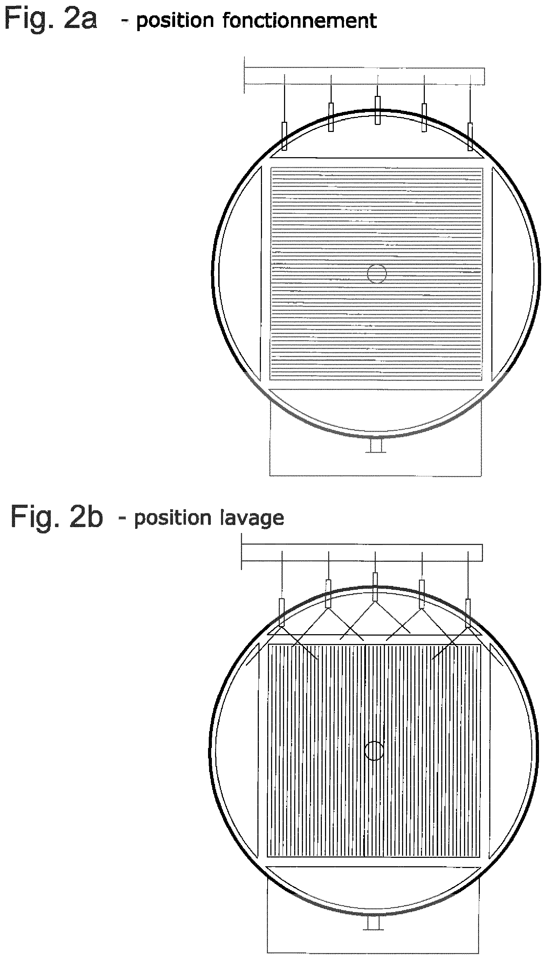

En fonctionnement normal, la structure tournante **11** est positionnée de façon à ce que les plaques ondulées soient positionnées à plat à l'horizontale, comme illustré sur la figure 2a. L'eau à traiter traverse le paquet de plaques et ressort épurée par la sortie **4.** Les huiles (la fraction légère) sont accumulées en partie supérieure et forment une couche **30** (figure 1) qui est purgée périodiquement par les sorties d'huile **5.**

Lorsqu'un lavage du paquet de plaques ondulées est nécessaire, le motoréducteur **14** fait pivoter la structure tournante à 90° comme montré sur la figure 2b, de façon à ce que les plaques ondulées se positionnent à la verticale. La rotation de la structure tournante peut se faire avec la cuve pleine d'eau ou après vidange de l'eau par les tuyauteries de vidange **8.** La rotation peut se faire également à un angle autre que 90°, dès lors que l'angle d'inclinaison des plaques est suffisant pour permettre l'écoulement des dépôts susceptibles de venir s'accumuler entre lesdites plaques.

Une fois la cuve vidangée, le système de lavage est alimenté en liquide de lavage sous pression et les buses **15** projettent ledit liquide de lavage sur le côté latéral supérieur du paquet de plaques. Comme ce côté est ouvert, le liquide de lavage pénètre entre les plaques et ruisselle le long des ondes inclinées en emportant les dépôts. Le liquide de lavage quitte le paquet de plaques ondulées par le côté latéral opposé (le côté inférieur du paquet) et est ensuite évacué par les vidanges **8.**

Le dispositif selon l'invention peut présenter diverses variantes. Ainsi donc, la cuve peut être entièrement pleine sans surface liquide libre (figure 1, 2) ou partiellement remplie avec une surface liquide libre comme montré sur la figure 3. Dans ce cas, la sortie de l'eau épurée s'effectue en partie supérieure de la cuve et la cuve est équipée d'une cloison siphoïdale **20** retenant les huiles (figure 3).

Le dispositif selon l'invention peut contenir une ou plusieurs structures tournantes comportant des paquets de plaques ondulées. Dans cette relation, le dispositif peut comporter plusieurs entrées et sorties de l'eau à traiter, disposées de façon à obliger l'eau à traiter à traverser le ou les paquets de plaques ondulées.

La structure tournante et le paquet de plaques ondulées peuvent avoir plusieurs cloisons **12** délimitant plusieurs espaces entre le côté entrée et le côté sortie du paquet de plaques ondulées, impliquant également plusieurs sorties d'huile.

La cuve du dispositif selon l'invention peut présenter une section circulaire (comme l'exemple décrit ci-dessus) ou toute autre forme, dès lors qu'elle est équipée de moyens assurant le cloisonnement du paquet de plaques ondulées lors du fonctionnement normal du dispositif selon l'invention.

Les moyens de cloisonnement du paquet de plaques peuvent être fixés sur la cuve ou bien sur la structure tournante.

Le dispositif peut être équipé ou non d'un système de lavage. Si le dispositif en est dépourvu, la simple rotation du paquet de plaques ondulées permettra aux dépôts de glisser le long des ondes inclinées et de quitter le paquet par le côté latéral inférieur.

Les moyens de lavage peuvent être fixés sur la cuve fixe ou bien sur la structure tournante.

Enfin, le dispositif selon l'invention peut être équipé de moyens d'injection de gaz sous pression. Ainsi, lors de la rotation de la structure tournante et le nettoyage du paquet de plaques ondulées, un gaz sous pression peut être injecté par les buses **9** situées au fond de la cuve. Il est entendu que, dans ce cas, la cuve demeure pleine, de façon à ce que les bulles de gaz traversent le paquet de plaques ondulées et décollent les dépôts.

## Revendications

1. Dispositif de séparation des deux phases liquides ayant des densités différentes ou des poids spécifiques différents par coalescence sur un paquet de plaques ondulées, comprenant :
▪ une cuve fixe (1,2) équipée
- d'au moins une entrée du liquide à traiter (3),
- d'au moins une sortie (4) de la fraction « lourde » dudit liquide, et
- d'au moins une sortie (5) de la fraction « légère » dudit liquide;
▪ d'au moins une structure tournante (11) installée à l'intérieur de la cuve fixe (1, 2) portant au moins un paquet de plaques ondulées (10), séparées les unes des autres d'une distance sensiblement constante et parallèles les unes aux autres, lesdites plaques étant ondulées dans le sens vertical et posées à plat à l'horizontale lors de la phase de séparation, ladite structure mobile (11) étant équipée de moyens (13) aptes à permettre la rotation de ladite structure au sein de ladite cuve (1,2) et de moyens (12) de cloisonnement aptes à orienter l'écoulement du liquide à traiter préférentiellement à travers le paquet de plaques ondulées ;
▪ des moyens d'entraînement (14) aptes à assurer la rotation de ladite structure tournante (11) portant le paquet de plaques ondulées (10) au sein de la cuve (1,2).

2. Dispositif de séparation de deux phases liquides selon la revendication 1, ***caractérisé* en ce que** la cuve (1,2) est équipée de moyens de lavage (15, 16, 17) par liquide ou par gaz sous pression.

3. Dispositif de séparation de deux phases liquides selon la revendication 2, ***caractérisé* en ce que** la structure tournante (11) est équipée de moyens de lavage aptes à tourner avec la structure tournante.

4. Dispositif de séparation de deux phases liquides selon l'une des revendications 1 à 3, ***caractérisé* en ce que** la structure tournante tourne autour d'un axe (13) pouvant faire partie de ladite structure tournante ou encore de la cuve fixe.

5. Dispositif de séparation de deux phases liquides selon l'une des revendications 1 à 3, ***caractérisé* en ce que** la structure tournante est équipée de moyens de guidage aptes à centrer ladite structure mobile et à permettre sa rotation au sein de la cuve (1,2), sans utiliser un axe (13).

6. Dispositif de séparation de deux phases liquides selon la revendication 5, ***caractérisé* en ce que** les moyens de centrage et guidage de la structure tournante sont fixés non pas sur la structure tournante, mais sur la cuve (1, 2) du dispositif selon l'invention.

## Patentansprüche

1. °/ Trennvorrichtung für zwei flüssige Phasen mit unterschiedlicher Dichte oder unterschiedlichem spezifischen Gewicht durch Koaleszenz auf einer Packung gewellter Platten, die umfasst:
▪ einen festen Tank (1, 2), ausgerüstet mit
- mindestens einem Einlass (3) für die zu behandelnde Flüssigkeit,
- mindestens einen Auslass (4) für den "schweren" Anteil der Flüssigkeit, und
- mindestens einen Auslass (5) für den "leichten" Anteil dieser Flüssigkeit;
▪ mindestens ein Drehgestell (11), installiert innerhalb des festen Tanks (1, 2), das mindestens eine Packung gewellter Platten (10) trägt, die durch einen annähernd konstanten Abstand voneinander getrennt sind und parallel zueinander liegen, diese Platten sind in vertikaler Richtung gewellt und werden während der Trennphase flach in horizontaler Richtung angeordnet, dieses bewegliche Gestell (11) ist mit Mitteln (13) ausgestattet, durch die die Rotation innerhalb dieses Tanks (1, 2) möglich ist, sowie Trennwänden (12) mit denen die zu behandelnde Flüssigkeit vorzugsweise durch die Packung mit gewellten Platten geleitet wird.
▪ Antriebsmittel (14), die in der Lage sind, die Rotation dieses Drehgestells (11), das die gewellten Platten (10) trägt, innerhalb des Tanks (1, 2) zu gewährleisten.

2. °/ Trennvorrichtung für zwei flüssige Phasen gemäß Anspruch 1, **dadurch gekennzeichnet, dass** der Tank (1, 2) mit Mitteln zur Reinigung (15, 16, 17) durch Flüssigkeit oder Gas unter Druck ausgerüstet sind.

3. °/ Trennvorrichtung für zwei flüssige Phasen gemäß Anspruch 2, **dadurch gekennzeichnet, dass** das Drehgestell (11) mit Mitteln zur Reinigung ausgerüstet ist, die sich mit dem Drehgestell, drehen können.

4. °/ Trennvorrichtung für zwei flüssige Phasen gemäß einem der Ansprüche 1 bis 3, **dadurch gekennzeichnet, dass** sich das Drehgestell um eine Achse (13) dreht, die zu diesem Drehgestell oder auch dem festen Tank gehören kann.

5. °/ Trennvorrichtung für zwei flüssige Phasen gemäß einem der Ansprüche 1 bis 3, **dadurch gekennzeichnet, dass** das dieses Drehgestell mit Führungsmitteln ausgerüstet ist, die in der Lage sind, dieses mobile Gestell zu zentrieren und seine Rotation innerhalb des Tanks (1, 2) zu erlauben, ohne eine Achse (13) einzusetzen.

6. °/ Trennvorrichtung für zwei flüssige Phasen gemäß Anspruch 5, **dadurch gekennzeichnet, dass** die Mittel zur Zentrierung und Führung des Drehgestells nicht auf dem Drehgestell befestigt sind, sondern auf dem Tank (1, 2) der Vorrichtung gemäß der Erfindung.

## Claims

1. °/ Device for separation of two liquid phases having different densities or different specific weights, by coalescence on a set of corrugated plates, incorporating:
- a fixed tank (1, 2) equipped with:
∘ at least one inlet for the liquid to be treated (3);
∘ at least one outlet (4) for the "heavy" fraction of the said liquid; and
∘ at least one outlet (5) for the "light" fraction of the said liquid;
- at least one rotating structure (11) installed within the fixed tank (1, 2) bearing at least one set of corrugated plates (10), which are separated from each other by a distance that is essentially constant and which are parallel in relation to each other, with the said plates being corrugated in the vertical direction and laid flat and horizontal during the separation phase, with the said mobile structure (11) being equipped with means (13) allowing the rotation of the said structure within the said tank (1, 2), and with means (12) of partitioning able to direct the flow of the liquid to be treated - preferably through the set of corrugated plates;
- a drive system (14) able to apply rotation to the said rotating structure (11) bearing the set of corrugated plates (10) within the tank (1, 2).

2. °/ Device for separation of two liquid phases in accordance with claim 1, **characterized in that** the tank (1, 2) is equipped with a scrubbing system (15, 16, 17) employing liquid or employing pressurized gas.

3. °/ Device for separation of two liquid phases in accordance with claim 2, **characterized in that** the rotating structure (11) is equipped with a scrubbing system able to rotate with the rotating structure.

4. °/ Device for separation of two liquid phases in accordance with one of claims 1 to 3, **characterized in that** the rotating structure rotates around a shaft (13) that can be part of the said rotating structure, or part of the fixed tank.

5. °/ Device for separation of two liquid phases in accordance with one of claims 1 to 3, **characterized in that** the rotating structure is equipped with a guidance system able to center the said mobile structure and enable its rotation within the tank (1, 2) without using a shaft (13).

6. °/ Device for separation of two liquid phases in accordance with claim 5, **characterized in that** the system for centering and guiding the rotating system is mounted not on the rotating structure but on the tank (1, 2) of the device according to the invention.
